# DEMANDE DE BREVET EUROPEEN

(11) **EP 1 079 572 A1**
(43) Date de publication de la demande: **28.02.2001**
(21) Numéro de dépôt: 00402322.2
(22) Date de dépôt: 21.08.2000
(51) Int. Cl.: H04L 12/56, H04Q 11/04, H04Q 3/62

(54) **Procédé d'établissement d'une communication par paquets**

(30) Priorité: 26.08.1999 FR 9910800
(71) Demandeur: ALCATEL, 75008 Paris (FR)
(72) Inventeur: Villate, Karine, 92250 La Garenne Colombes (FR); Phan, Cao Thanh, 92500 Rueil Malmaison (FR)
(74) Mandataire: Sciaux, Edmond

(57) **Abrégé**

Pour éviter, lors de l'établissement d'une communication par paquets entre un appelant (1) et un appelé (2), une attribution d'un numéro de voie logique a deux communications différentes, on anticipe une réservation de ce numéro de voie logique dès la réception de la demande d'établissement par l'appelé (2). Le numéro de voie logique étant ainsi réservé, on assure une seule affectation d'une communication à un numéro de voie logique quand bien même cette communication serait établie plus rapidement.

## Description

La présente invention a pour objet un procédé de communication par paquets. Elle s'applique au dispositif de communication pouvant établir une liaison de communication en utilisant une transmission par paquets entre un appelant et un appelé. Ainsi, cette invention s'applique plus particulièrement à des commutateurs réalisant de la commutation de paquets. Le but de l'invention est de permettre d'anticiper une allocation d'une ressource, ou encore voie logique, afin d'éviter d'avoir une allocation multiple d'une même ressource à plusieurs communications.

Dans la plupart des cas, les différents éléments composant une liaison de communication échangent des messages de signalisation afin d'établir cette liaison. Pour assurer une cohérence des différents messages échangés entre l'appelant et l'appelé, on réalise ces différents éléments en conformité avec un modèle de référence. Généralement, on utilise comme modèle de référence le modèle OSI (Open System Interconnexion en anglais pour Interconnexion de Système Ouvert en français). Ce modèle OSI permet de décrire un système selon sept couches hiérarchisées, une couche réalisant un certain nombre de fonctionnalités déterminées et normalisées. On connaît notamment pour cela les recommandations X200 à X299 de l'UIT-T (département de normalisation des Télécommunications de l'Union Internationale des Télécommunications) relatives à une description des différentes couches. Parmi ces différentes couches, on trouve tout d'abord la couche physique qui correspond à la couche de plus bas niveau hiérarchique. Cela signifie que la couche physique est en communication directe avec le support de communication avec lequel le système informatique est relié ou tout du moins la plus proche d'un périphérique destiné à être relié sur un tel support. On trouve ensuite, dans l'ordre, la couche liaison, la couche réseau, la couche transport, la couche session, la couche présentation et la couche application qui correspond à la couche de plus haut niveau hiérarchique. La couche application est donc la couche qui a un contact le moins direct avec le support de communication. En conséquence, un message émis par la couche application est transmis par l'intermédiaire des six couches qui lui sont hiérarchiquement inférieures avant d'atteindre le support.

Selon cette modélisation, la notion de paquets est propre à la couche réseau. Ainsi, lorsque l'on décide de réaliser une transmission par paquets cela signifie que la couche réseau utilise des protocoles de communication associés à une transmission par paquets. Un protocole connu pour une transmission par paquet est le protocole X25.

Un paquet de données est un groupe de données identifiées par un entête. Ainsi, un message à émettre est découpé en groupe de données. Chaque groupe de données est identifié par un entête. Dans cet entête, on trouve principalement un message d'identification de l'appelant et un message d'identification de l'appelé. On trouve aussi un numéro de voie logique.

En effet, dans une transmission par paquets un canal de communication n'est pas forcément dédié à une seule communication. En conséquence, lorsqu'on émet un paquet sur un canal on lui attribue un numéro dit de voie logique qui sera logique pour tous les autres paquets suivants de la même communication. Ainsi, un paquet appartenant à une autre communication comportera un autre numéro de voie logique.

Actuellement, on utilise généralement, dans le cadre d'une transmission par paquets, comme support de communication un réseau numérique à intégration de services couramment appelé réseau RNIS (ou encore ISDN pour Integrated Service Data Network en anglais). Ainsi, à une première entrée de ce réseau RNIS est reliée à un dispositif appelant souhaitant établir une liaison de communication avec un dispositif appelé relié à une deuxième entrée de ce réseau RNIS. L'appelant est relié à la première entrée par l'intermédiaire d'un premier dispositif de communication permettant de communiquer en utilisant un mode paquet. Ce premier dispositif est, par exemple, un réseau de communication par paquets. On parle aussi de réseau à commutation de paquets. L'appelé est relié, à la deuxième entrée par l'intermédiaire d'un deuxième dispositif de communication permettant de communiquer en utilisant un mode paquet. Ce deuxième dispositif est, par exemple, un autocommutateur comportant les moyens nécessaires à une communication par paquets. Cependant, dans un cas didactique très simple, on peut dire que l'appelant et l'appelé sont relié au réseau RNIS par l'intermédiaire d'un premier et d'un deuxième commutateur de paquet. L'établissement d'une liaison de communication entre l'appelant et l'appelé, et plus précisément entre le premier et le deuxième commutateur, est réalisé en respectant la recommandation X31 cas B de l'UIT-T.

On rappelle qu'un réseau RNIS permet de mettre à disposition d'un utilisateur plusieurs canaux de transmission dont un canal de signalisation appelé canal D et au moins deux canaux de données appelés canaux B. Ainsi, lors de l'établissement d'une liaison de communication, les différents messages de signalisation échangés vont permettre tout d'abord de sélectionner un canal de transmission puis un numéro de voie logique dans ce canal de transmission. La phase permettant de sélectionner le canal de transmission est mise en oeuvre en respectant la recommandation Q931. Une description de la recommandation Q931 est donnée dans le document "ITU-T Recommandation Q931 (1993), *Digital Subscriber Signalling System No 1 (DSS 1) - ISDN user-network interface - Data link layer specification*". Ainsi, suite à cette phase de signalisation suivant la norme Q931 l'appelant connaît un numéro de canal sur lequel il pourra communiquer et avec quel débit il le pourra. On exécute ensuite une deuxième phase dans laquelle on active les différentes fonctionnalités nécessaires de la couche 2 du premier et du deuxième commutateur. Ces différentes fonctionnalités sont regroupées principalement dans des procédures associées au protocole LAP-B ou LAP-D (Link Access Protocole en anglais pour Protocole d'Accès au Lien en français) selon que l'on considère un canal B ou un canal D. Une fois ces fonctionnalités mises en oeuvre l'appelant communique à l'appelé un numéro de voie logique. Ainsi, tous les paquets dont l'entête comporte ce numéro de voie logique appartiennent à la communication entre l'appelant et l'appelé.

Cette réalisation présente des problèmes. En effet, le numéro de voie logique n'est disponible qu'après ces étapes de signalisation. De plus, une phase de signalisation pour une communication peut être plus longue qu'une autre phase de signalisation pour une autre communication.

En conséquence, le numéro de voie logique attribué au paquet de la première communication pourra se voir attribuer réellement au paquet de la deuxième communication. Ceci a pour effet de faire échouer la première communication et donc d'occasionner un renouvellement de la demande d'établissement de la première communication. Ce problème peut être plus ou moins gênant selon un nombre d'utilisateurs utilisant ce canal de communication. En effet, s'il y a beaucoup d'utilisateurs le renouvellement de la demande pourra ne pas être immédiat suite à une saturation du canal. Cependant, un autre canal pourrait être affecté à cette nouvelle demande mais le même problème peut se répéter suite à la sélection de ce nouveau canal.

La présente invention a pour objet de remédier à ces problèmes en proposant un procédé dans lequel on anticipe une réservation de la voie logique. En conséquence, les différentes phases de signalisation peuvent se poursuivre normalement tout en sachant que le numéro de voie logique est ainsi réservé. Ainsi, il n'y a plus de risque de conflit d'attribution d'un numéro de voie logique.

La présente invention présente donc un procédé d'établissement d'une communication par paquet selon le protocole X31 cas B entre un dispositif appelant et un dispositif appelé dans lequel :
- on émet une demande d'établissement d'un canal comportant une information relative à un débit demandé de la communication à établir,
- on émet, à destination de l'appelé, un message de réponse à la demande d'établissement, le message de réponse comportant une information relative à un canal disponible et supportant le débit demandé,
- on établit le canal disponible,
- on émet, à partir de l'appelant, une demande d'appel comportant une information relative au débit demandé et un numéro de voie logique, un numéro de voie logique permettant d'identifier des paquets associés à un même message à transmettre au débit demandé sur le canal disponible,
caractérisé en ce que :
- on mémorise, dans une mémoire de sauvegarde, un numéro de voie logique associé au débit demandé avant d'émettre le message de réponse.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation simplifiée d'un exemple d'architecture permettant l'établissement d'une liaison de communication.
- Figure2 : un diagramme montrant les principaux messages échangés entre l'appelant et l'appelé.

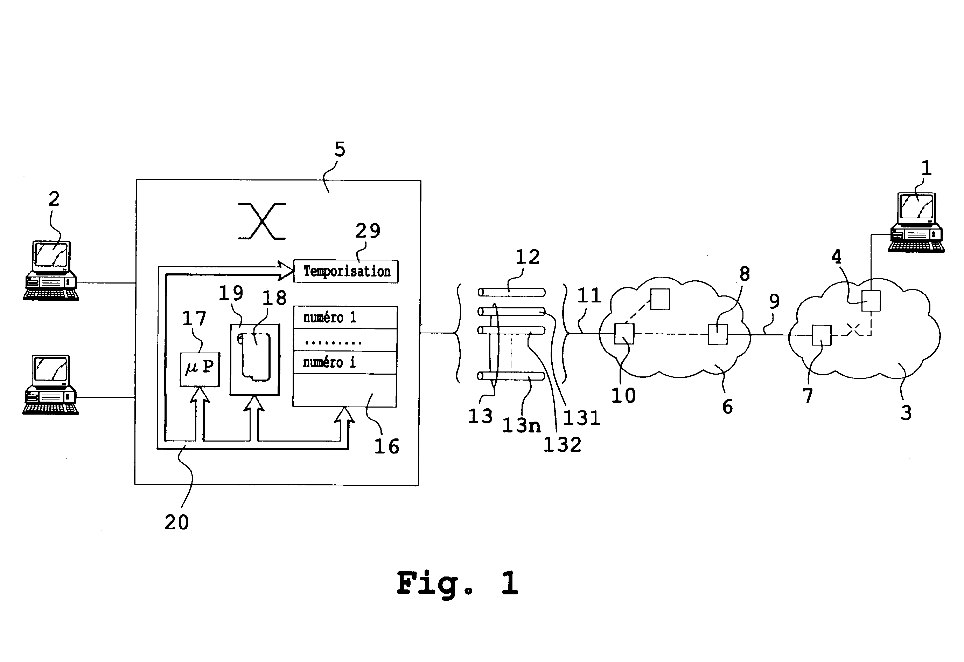

La figure 1 montre les principaux moyens utilisés, dans un exemple préféré, pour établir une liaison de communication entre un dispositif 1 appelant et un dispositif 2 appelé. Dans cet exemple préféré, le dispositif 1 ou encore l'appelant 1 est par exemple un ordinateur. L'appelant 1 est relié à un réseau 3 à commutation de paquets, c'est-à-dire que le réseau 3 est constitué de commutateurs interconnectés selon une architecture physique maillée. En outre, le réseau 3 comporte des ports d'accès permettant de relier un ordinateur ou tout autre équipement au réseau 3. Ces ports d'accès peuvent être ou non placés dans un commutateur. Ainsi, l'appelant 1 est relié à un port 4 d'accès. Dans cet exemple préféré, le dispositif 2 ou encore l'appelé 2 est un ordinateur distant c'est-à-dire qu'il n'est pas relié directement au réseau 3. L'appelé 2 est relié, dans un exemple, à un autocommutateur de type PABX (Private Access Branch Exchange en anglais pour Autocommutateur à Accès Privé en français). Cet autocommutateur 5 comporte, dans l'invention, des moyens pour traiter une transmission en mode paquets. Un autocommutateur est un dispositif permettant de gérer un accès à un support de communication mis à disposition des utilisateurs raccordés à cet autocommutateur. On peut, dans un cas générale très simple, ramener son fonctionnement à un dispositif de multiplexage-démultiplexage voire même à un ensemble de tels dispositifs. En conséquence, à un instant donné, un commutateur peut être vu comme une liaison dédié à un utilisateur raccordé à cet autocommutateur.

Dorénavant, pour décrire l'établissement d'une liaison de communication entre l'appelant 1 et l'appelé 2, on ne s'intéressera qu'à ce qu'il se passe entre l'autocommutateur 5 et le réseau 3. Ces deux derniers comportent les moyens nécessaires pour établir en interne une liaison avec l'appelé et l'appelant respectivement.

Ainsi, établir une communication entre l'appelant 1 et l'appelé 2 revient à établir une liaison de communication entre le réseau 3 et l'autocommutateur 5. Il faut donc un support de communication auquel sont reliés le réseau 3 et l'autocommutateur 5. Dans cet exemple préféré, le support de communication est un réseau 6 de type RNIS pour Réseau Numérique à Intégration de Services. Le réseau 3 comporte un port 7 d'accès relié à un port 8 d'accès du réseau 6 par l'intermédiaire du réseau 9. De même, l'autocommutateur 5 est relié à un port 10 du réseau 6 par l'intermédiaire d'une liaison 11.

Dans le cadre d'un réseau numérique à intégration de services tel que le réseau 6, on met à disposition d'un utilisateur qui s'y connecte un certain nombre de canaux. Ainsi, la liaison 11, par exemple, comporte un canal 12 ou canal D appelé aussi canal de signalisation et un ensemble 13 de canaux 13 1, 13 2 à 13 n B appelés aussi canaux de données. L'établissement d'une communication à travers la liaison 11 consiste donc à choisir un canal parmi les canaux 12, 13 1 à 13 n puis d'attribuer un numéro de voie logique pour une transmission à travers le canal ainsi sélectionné.

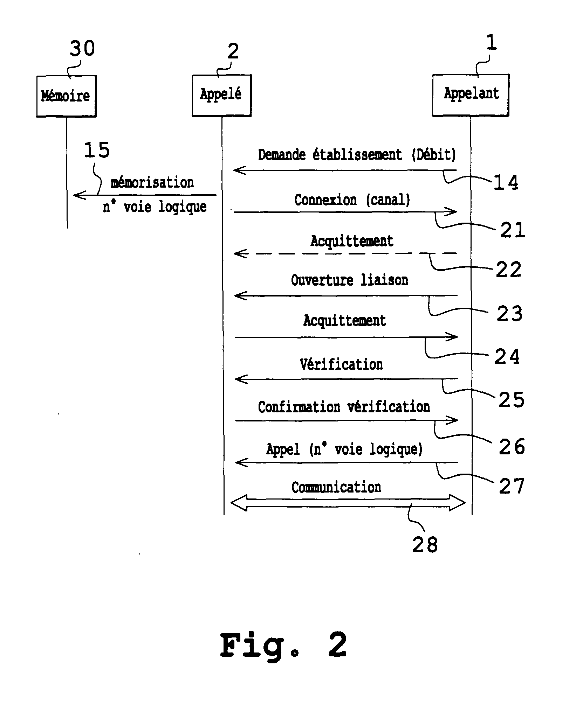

La figure 2 montre un diagramme faisant apparaître les principaux messages échangés entre l'appelant 1 et l'appelé 2. Ainsi, l'appelé 2 reçoit une demande 14 d'établissement demandée par l'appelant 1. Cette demande 14 comporte entre autres une information relative à un débit souhaité de cette communication à établir entre l'appelant 1 et l'appelé 2.

Selon une caractéristique essentielle de l'invention on valide une mémorisation 15, dans une mémoire 16 (figure1) de sauvegarde de l'autocommutateur 5, d'un numéro de voie logique, ce numéro de voie logique étant associé à un débit utile pour la communication. Cette mémorisation 15 est validée dès la réception de la demande 14, c'est à dire dès que l'autocommutateur 5 dispose de l'information de débit utile. Ainsi, le numéro de voie logique associé à la demande d'établissement de la communication entre l'appelant 1 et l'appelé 2 est réservé dès que la demande 14 est détectée par l'appelé. On élimine ainsi les conflits dans l'attribution du numéro de voie logique.

La mémoire 16 est gérée par un microprocesseur 17 commandé par un programme 18 dans une mémoire 19 de programme, le tout étant relié par un bus 20 de données, d'adresses et de commandes.

En réponse à la demande 14, l'appelé 2 émet une autorisation 21 de connexion. Cette autorisation 21 comporte une information relative à un canal à utiliser, c'est-à-dire un canal disponible parmi les canaux 12, 13 1 à 13 n et pouvant supporter le débit utile. L'appelé 2 reçoit éventuellement un acquittement 22 de l'autorisation 21 donné. En fait, si aucun acquittement 22 n'est reçu pendant un certain intervalle de temps alors l'acquittement 22 est sous-entendu. La demande 14, l'autorisation 21 et l'acquittement 22 permettent de mettre en oeuvre, pendant cette première étape de dialogue, les différentes fonctionnalités associées aux couches physiques des deux systèmes à mettre en communication. Les messages échangés entre l'appelant 1 et l'appelé 2 pendant la première étape le sont en respectant la recommandation Q931 de l'UIT-T. Une fois les couches 1 établies, il faut établir une communication entre les couches 2 de l'appelant 1 et de l'appelé 2. Dans ce cas, un protocole utilisé est le protocole LAP-B ou Lap-D selon qu'un canal sélectionné lors de la phase 15 est le canal 12 ou l'un des canaux 13-1 à 13-n respectivement. Après l'acquittement, on établit le canal disponible ainsi sélectionné.

Ainsi l'appelant émet un message 23 indiquant à l'appelé 2 qu'il s'agit d'une demande d'ouverture d'une liaison. L'appelé 2 émet alors un message 24 d'acquittement à destination de l'appelant 1. Cela permet d'activer les différentes fonctionnalités associées à la couche liaison de l'appelant 1 et le l'appelé 2. Dorénavant, la couche physique et la couche liaison sont disponibles pour établir une communication à travers le canal sélectionné. Auparavant, il est nécessaire d'activer la couche réseau de l'appelant 1 et de l'appelé 2. La couche réseau, dans le cas d'une transmission par paquets, est définie à l'aide de la recommandation X25 de l'UIT-T. Pour cela, l'appelant 1 émet un message 25 de vérification. L'appelé émet alors un message 26 de confirmation en réponse au message 25. Une fois ces messages 23 à 26 échangés entre l'appelant 1 et l'appelé 2, l'appelant 1 émet un message 27 d'appel, en destination de l'appelé 2. Ce message 27 comporte en outre un numéro de voie logique proposé. L'autocommutateur 5 a la possibilité d'accepter ou de refuser ce numéro de voie logique. Si l'autocommutateur 5 refuse le numéro de voie logique qui lui est proposé alors un autre numéro doit lui être proposé.

Lorsque l'appelé 2 reçoit le message 27, le microprocesseur 17 recherche dans la mémoire 16 une suite de numéros de voies logiques mémorisées et utilise le numéro de voie logique mémorisé dont un débit associé correspond au débit associé au numéro de voie logique proposé par l'appelant 1. Suite à cela, l'autocommutateur 5 peut renommer la voie logique ainsi trouvé en utilisant le numéro de voie logique proposé par l'appelant 1. Une communication 28 peut maintenant être établie entre l'appelant 1 et l'appelé 2 dès lors que l'appelé 2 répond à la demande 27 émise.

En anticipant ici la réservation du numéro de voie logique, on évite que le numéro de voie logique proposé lors de l'appel 27, avec son débit associé, soit affecté à une autre communication dont une procédure d'établissement a été plus rapide pour quelque raison que ce soit.

Dans une variante de l'invention, on munit l'autocommutateur 5 d'un dispositif 29 de temporisation. On règle ce dispositif 29 avec une durée de garde. Le numéro de voie logique réservé dans la mémoire 16 est libéré, ainsi que le débit associé, si une durée d'attente d'un message d'appel de l'appelant 1,c'est à dire le message 27, est supérieure au temps de garde. En effet, cela permet d'éviter que l'autocommutateur 5 réserve pendant une durée excessive des numéros de voies logiques qui pourraient être utilisés pour d'autres demandes de communication.

En amélioration de cette variante, on peut régler la durée de temporisation à la demande. Ce réglage peut être effectué en fonction de l'activité de l'autocommutateur 5. En effet, plus une activité de l'autocommutateur 5 est grande en terme de trafic et plus la durée de garde est faible. Ceci permet d'avoir un réglage auto-adaptatif de la durée de garde.

## Revendications

1. Procédé d'établissement d'une communication par paquets selon le protocole X31 cas B entre un dispositif (1) appelant et un dispositif (2) appelé, via un commutateur (5), dans lequel :
- l'appelant (1) émet, à destination de l'appelé (2), une demande (14) d'établissement d'un canal comportant une information relative à un débit souhaité de la communication à établir,
- l'appelé (2) émet à destination de l'appelant (1) un message de réponse (21) à la demande d'établissement, le message de réponse comportant une information relative à un canal disponible et supportant le débit demandé,
- le commutateur (5) établit le canal disponible (12, 13 1 à 13 n),
- on émet, à partir de l'appelant (1), une demande d'appel (27) comportant une information relative au débit demandé et un numéro de voie logique, un numéro de voie logique permettant d'identifier des paquets associés à un même message à transmettre sur le canal disponible,
**caractérisé** en ce que, lorsque l'appelant (1) émet, à destination de l'appelé (2), une demande (14) d'établissement d'un canal, on mémorise (15) dans le commutateur (5), dans une mémoire (16) de sauvegarde, un numéro de voie logique associé au débit demandé, avant de transmettre le message de réponse (21).

2. Procédé selon la revendication 1 caractérisé en ce que :
- on munit le commutateur (5) d'un dispositif de temporisation,
- et on règle le dispositif de temporisation avec une durée de garde après laquelle un numéro de voie logique réservée est libéré si la durée d'attente d'un message d'appel du dispositif appelant est supérieure au temps de garde.

3. Procédé selon la revendication 2 caractérisé en ce qu'on règle la durée de temporisation à la demande en fonction de l'activité du commutateur (5).

4. Commutateur de paquets, comportant, pour l'établissement d'une communication par paquets selon le protocole X31 cas B entre un dispositif (1) appelant et un dispositif (2) appelé :
- des moyens pour transmettre de l'appelant (1) vers l'appelé (2) une demande d'établissement d'un canal comportant une information relative à un débit souhaité de la communication à établir,
- des moyens pour transmettre de l'appelé (2) à l'appelant (1) un message de réponse à la demande d'établissement, le message de réponse comportant une information relative à un canal disponible et supportant le débit demandé,
- des moyens pour établir le canal disponible (12, 13 1 à 13 n),
- des moyens pour recevoir de l'appelant (1), une demande d'appel (27) comportant une information relative au débit demandé et un numéro de voie logique, un numéro de voie logique permettant d'identifier des paquets associés à un même message à transmettre au débit demandé sur le canal disponible,
**caractérisé** en ce qu'il comporte en outre des moyens pour mémoriser, dans une mémoire (16) de sauvegarde, un numéro de voie logique associé au débit demandé, avant de transmettre le message de réponse.

5. Commutateur de paquets selon la revendication 4 caractérisé en ce qu'il comporte en outre un dispositif de temporisation pour libérer le numéro d'une voie logique réservée, si la durée d'attente d'un message d'appel du dispositif appelant est supérieure à un temps de garde prédéterminé.

6. Commutateur de paquets selon la revendication 5, caractérisé en ce qu'il comporte en outre des moyens pour régler la durée de temporisation à la demande, en fonction de l'activité du commutateur (5).
